# EUROPEAN PATENT SPECIFICATION

(11) **EP 2 144 786 B1**
(45) Date of publication and mention of the grant of the patent: **23.03.2016**
(21) Application number: 08747940.8
(22) Date of filing: 13.05.2008
(51) Int. Cl.: B60J 7/10

(54) **TENSIONING DEVICE**
SPANNVORRICHTUNG
DISPOSITIF DE MISE SOUS TENSION

(30) Priority: 15.05.2007 AU 2007902574 P
(43) Date of publication of application: 20.01.2010
(73) Proprietor: Transtech Research PTY, Ltd., Derrimut, Victoria 3030 (AU)
(72) Inventor: THOMAS, David, Magpie, Victoria 3352 (AU)
(74) Representative: Papula Oy
(86) International application number: PCT/AU2008/000669
(87) International publication number: WO 2008/138059

(56) References cited:
- EP-A2- 1 254 801
- WO-A1-2006/089347
- WO-A1-2006/089347
- GB-A- 2 311 087
- US-A- 5 607 200
- US-A- 5 607 200

## Description

### TECHNICAL FIELD

The present invention relates to a tensioning device and more particularly to a tensioning device for tensioning side curtains on trucks and trailers.

### BACKGROUND ART

Conventional side curtains on truck and trailer bodies are retained along the top edge on a rail system extending along the roof of the body in a manner whereby the curtain may be slid between the ends of the body. At one or both ends of the body the curtain is wrapped around a vertical pipe and the pipe is rotatable by a ratchet mechanism to tension the curtain in a horizontal direction. Along the bottom edge the curtain is tensioned in a vertical direction by a large number of closely spaced straps and buckles with hooks that engage underneath the coaming rail of the body. In the case of a 48 foot long trailer there is as many as 22 such straps. These straps and buckles require a significant amount of time to attach and tension, considerably increasing the time to load and unload a curtain sided truck or trailer.

More recently transport vehicle regulations have become more stringent in relation to side load restraints, and the side curtains are no longer acceptable as such load restraints. In fact it is now necessary to provide more substantial load restraints on the inside of the curtains, and the curtains now serve primarily as visual and environmental protection of the load.

The present Applicants have invented a side curtain having a bottom edge in the shape of a series of intersecting arcs (preferably three) and the curtain is tensioned in a vertical direction at the intersection of the arcs (see pending International Patent Application No. PCT/AU2008/000129 in the name of the present Applicants). Additionally, in the patent document US 5607200, a mechanism for securing a bottom end of a curtain in a curtainside trailer is disclosed. In this disclosure, a hook-shaped member engages the bottom edge of the curtain. A driving mechanism is used to extend the hook-shaped member outboard of the side rail of the trailer and to retract it completely underneath the side rail of the trailer.

The object of the present invention is to provide a tensioning device for tensioning side curtains such as that of Applicants' aforementioned International patent application, as well as being suitable for other purposes.

### DISCLOSURE OF THE INVENTION

Accordingly, the invention provides a tensioning device for tensioning a truck or trailer side curtain in a vertical direction, said device comprising an arm member having a hook at one end and being mounted in a frame to move initially from a retracted position, under a floor of the truck or trailer body, to an extended position wherein it projects beyond a perimeter edge of said floor, said arm member being further adapted for pivotal movement to pivot downwardly from said extended position to a final position, whereby engagement of said hook with a side curtain in said extended position causes vertical tension to said curtain as a result of said pivotal movement to said final position.

### BRIEF DESCRIPTION OF THE DRAWINGS

In order that the invention may be more readily understood a particular embodiment will now be described with reference to the accompanying drawings wherein:
Figure 1 is a schematic side elevational view of a tensioning device according to the invention in a retracted position (parts have been removed for clarity);
Figure 2 is similar to Figure 1 but shows the device in an intermediate stage of operation;
Figure 3 is similar to Figures 1 and 2 but shows the device in the final position of operation in tensioning a side curtain; and,
Figure 4 is similar to Figure 3 but shows the device in the final position of operation with locking catch engaged.

### MODES FOR CARRYING OUT THE INVENTION

Referring now to the drawings which show a tensioning device 10 suitable for tensioning the side curtain of a truck or trailer. The device 10 is constructed as a separate and complete device which is readily attached to the underside of a truck or trailer body (not shown). The device 10 consists essentially of a hook 11 which is arranged at one end of an elongate arm 12 at the other end of which is an integral crank 13. The hook 11 has an elongate finger 14 depending therefrom.

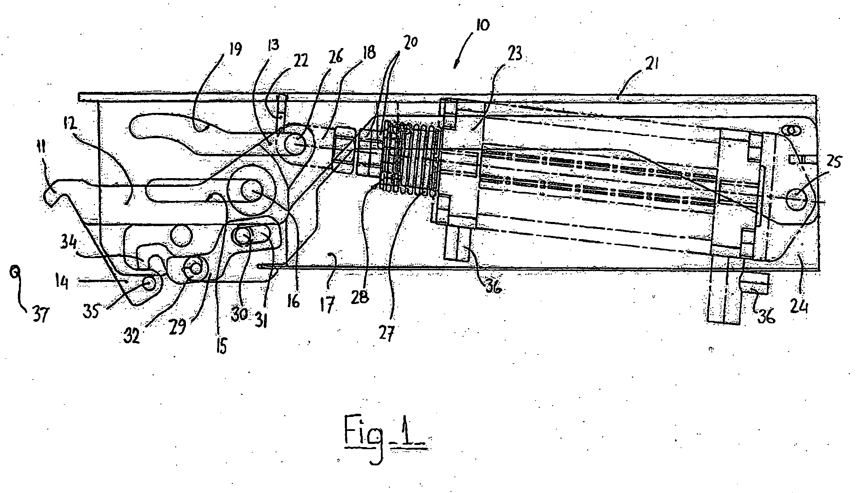

The hook member 11 pivots on a shaft 16 extending between opposed side plates 17, only one of which is shown in Figures 1 to 3. The shaft 16 is located in opposed slots 15 in the respective side plates 17 and is able to slide therein as will be apparent hereinbelow.

A pneumatic cylinder 23 is mounted on a web 24 extending from an end plate (not shown) of the device and is able to pivot thereon by means of pivotal connection 25. The actuating shaft 18 of the cylinder 23 is connected to the crank 13 by a pin 26. The pin 26 extends between the opposed side plates 17 and each end of the pin 26 is located in a slot 19 in the respective side plates.

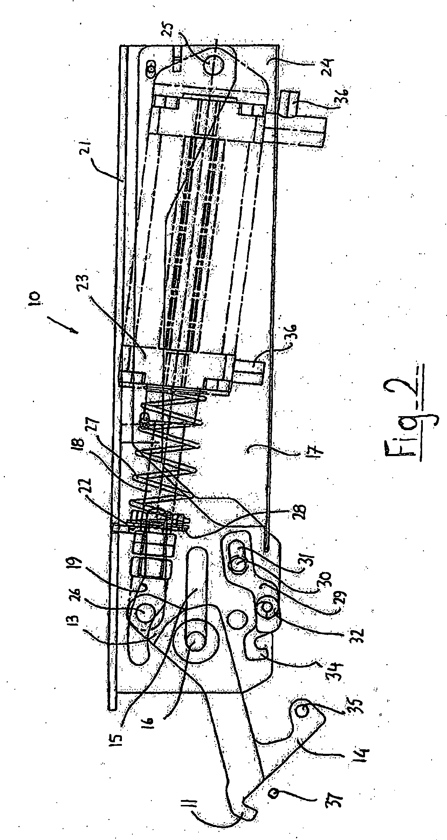

A compression spring 27 is located on the shaft 18 and is compressed between the end of the cylinder 23 and a washer 28 which is retained on the shaft by lock-nuts 20. A stop member 22 extends downward from a top plate 21 of the device and serves to engage the washer 28 when the shaft 18 is extended under the force of spring 27 (see Figure 2).

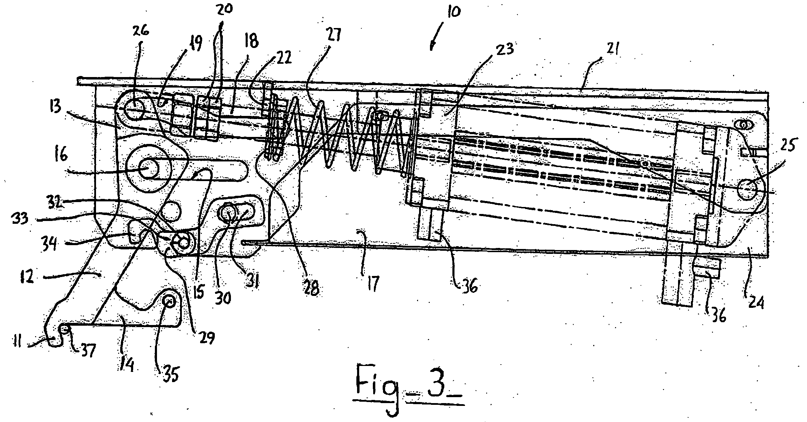

A manually operated locking catch 29 is mounted on a side plate 17 by means of a pin 30 located in slot 31 and has a handle 32 which is parked in slot 33 (Figure 3) of plate 17 when the catch is inactive. The catch 29 has a hooked end 34 for engaging a pin 35 at the end of finger 14 when the device is in a fully extended position applying tension to a side curtain.

Compressed air is supplied to the cylinder 23 from an actuating valve (not shown) via ports 36 of the cylinder 23. The actuating valve has three positions as will be apparent hereinbelow.

The complete assembly may be fixed to the underside of a truck or trailer floor so that the device extends transversally of the truck or trailer longitudinal direction, and the outer end of the side plates 17 are approximately flush with the perimeter outer edge of the trailer floor (not shown).

In the retracted or non-use position of the tensioning device as shown in Figure 1 the arm 12 is fully retracted between the side plates of the device. Air pressure in cylinder 23 retains the device in this position with the spring 27 fully compressed. A side curtain of a truck or trailer in a closed condition has a rope or cable 37 which is exposed at the position of the device 10. In other words, the rope or cable is enclosed in a pocket or seam at the edge of the curtain over most of its length, but is exposed at the position of the or each tensioning device 10.

In order to tension the curtain in a vertical direction, an operator switches the actuating valve (not shown) from a 'release' position to a 'centre' position whereby pressure in cylinder 23 is exhausted and the spring 27 causes the actuating shaft 18 of cylinder 23 to remove to the position shown in Figure 2. This causes the pin 16 to slide in grooves 15 and pin 26 to slide in grooves 19 whereby the arm 12 moves from the retracted position to the extended position shown in figure 2. In this extended position, the operator is able to check the relative positions of the rope or cable 37 and the hook 11 by walking along the side of the truck or trailer body. This is to ensure the rope or cable is in the correct position for engagement by the hook 11 in the next stage of operation. Once it is confirmed that the rope or cable is approximately in the relative position shown in Figure 2, the operator switches the actuating valve to an 'engage' position whereby pressure is applied in the cylinder 23 to cause the actuating shaft 18 to move further out to the position shown in Figure 3. This movement causes pin 16 to slide to the extreme end of the slots 15 and pin 26 to follow the arcuate portion of slots 19 to the extreme end thereof. As a result, the arm 12 pivots downwardly from the 'extended' position to the 'final' position whereby downward vertical tension is applied to the side curtain.

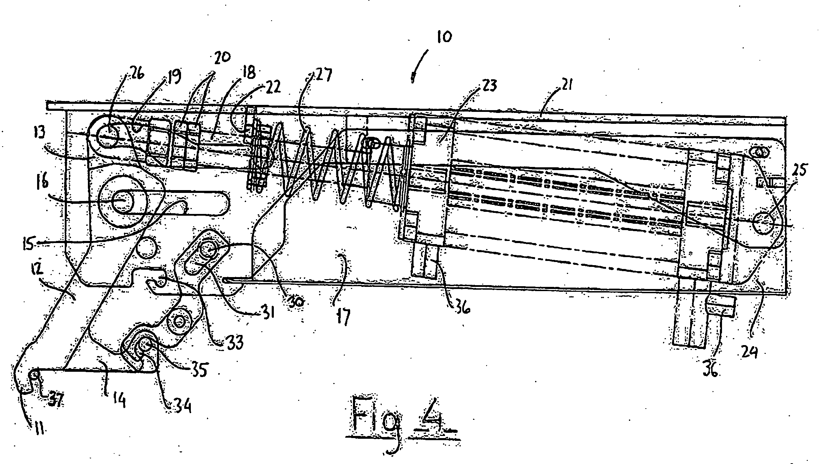

In the 'final' position, the locking catch 29 may be manually moved from the position shown in Figure 1 to the position shown in Figure 4 so that it engages the finger 14 and holds the arm 12 in the fully extended or final position. As such, any loss of pneumatic pressure in cylinder 23 will not cause release of vertical tension in the side curtain.

As will be evident from the description hereinabove the tensioning device of the present invention provides a novel and automatic device for tensioning a trailer side curtain and the device is particularly suitable for a side curtain as described in Applicants' aforementioned International patent application. It should however be appreciated that the tensioning device may be applied to many other forms of side curtain as it is only necessary for the curtain to have some means such as a hole, hook, eye, rope or cable which can be engaged by the hook of the tensioning device. Clearly a number of such tensioning devices would be provided along the length of a truck or trailer floor and it is conceivable that the tensioning device could be readily adapted to other applications besides trailer side curtains.

It should also be evident that whilst one particular embodiment has been described hereinabove many variations may be readily effected by persons skilled in the art and clearly other mechanisms could be utilised to provide the outward downward and inward movement of the hook for the purpose of tensioning a side curtain. Whilst it is preferable to use a pneumatic cylinder for actuating the device it could clearly be done using a hydraulic electric or even a manually actuated mechanism.

## Claims

1. A tensioning device (10) for tensioning a truck or trailer side curtain in a vertical direction, said device (10) comprising an arm member (12) having a hook (11) at one end and being mounted in a frame to move initially from a retracted position, under a floor of the truck or trailer body, in a horizontal direction to an extended position wherein it projects beyond a perimeter edge of said floor, **characterized by** said arm member (12) being further adapted for pivotal movement to pivot downwardly from said extended position to a final position under said floor, whereby engagement of said hook (11) with a side curtain in said extended position causes vertical tension to said curtain as a result of said pivotal movement to said final position.

2. The tensioning device (10) as defined in claim 1, wherein said arm member (12) has a crank (13) at the other end for connecting said arm member (12) to actuating means for causing said movement.

3. The tensioning device (10) as defined in claim 2, wherein said actuating means comprises pneumatic, hydraulic or electrical actuating means.

4. The tensioning device (10) as defined in claim 3, wherein said actuating means comprises a pneumatic cylinder (23) having an actuating rod (18) connected to a free end of said crank (13), first guide means for guiding a pivot point of said crank (13) in a horizontal direction to a stop position, and second guide means for guiding said free end of said crank (13) initially in a horizontal direction and when said pivot point reaches said stop position, in an arc about said pivot point whereby said one end of said arm (12) and hence said hook (11), pivots downwardly to said final position.

5. The tensioning device (10) as defined in claim 4, wherein said pneumatic cylinder (23) is pressurized in a first direction to retain said arm member (12) in said retracted position and upon release of said pressure said actuating rod (18) is moved, by a compression spring (27) on said rod (18), to a position wherein said arm member (12) is in said extended position, and said cylinder (23) is pressurized in an opposite direction to said first direction to cause said arm (12) to move to said final position.

6. The tensioning device (10) as defined in claim 5, including a manually actuated locking device for retaining said arm member (12) in said final position.

7. The tensioning device (10) as defined in claim 6, wherein said first and second guide means comprise a pair of slots (15, 19) in each of opposed side plates (17) of said device (10), which slots (15, 19) are engaged by pivot pins (16, 26) extending through said pivot point of said crank (13) and said free end of said crank (13), respectively, said pivot pin (26) extending through the free end of said crank (13) also attaching said actuating rod (18) to said crank (13).

8. The tensioning device (10) as defined in claim 7, wherein said compression spring (27) is arranged over said actuating rod (18) and forces said rod (18) out of said cylinder (23) until said spring (27) reaches a stop member (22) on said device (10), at which time said arm member (12) is in said extended position.

9. The tensioning device (10) as defined in claim 8, wherein a manual locking catch (29) is provided on said device (10) for engaging said hook (11) in said final position to prevent movement back to said extended or retracted positions in the event of a failure of pneumatic pressure in said cylinder (23).

10. The tensioning device (10) as defined in claim 9, wherein said hook (11) has a finger (14) extending therefrom, said finger (14) preventing a rope or wire (37) of said curtain engaging under said arm member (12) or behind said hook (11) when said arm (12) is moved to said extended position, said finger (14) providing means for engagement by said locking catch (29).

## Patentansprüche

1. Spanneinrichtung (10) zum Spannen eines Seitenvorhangs eines LKW oder Anhängers in einer vertikalen Richtung, wobei die Einrichtung (10) ein Armelement (12) umfasst, das einen Haken (11) an einem Ende aufweist und in einem Rahmen unter einem Boden des LKW oder Anhängers montiert ist, um anfangs von einer zurückgezogenen Position in einer horizontalen Richtung zu einer ausgestreckten Position zu bewegen, wobei es hinter einer Umfangsecke des Bodens hervorspringt, **dadurch gekennzeichnet, dass** das Armelement (12) ferner für eine Schwenkbewegung angepasst ist, um abwärts von der ausgefahrenen Position zu einer Endposition unter dem Boden zu schwenken, wobei ein Eingriff des Hakens (11) mit einem Seitenvorhang in der ausgefahren Position vertikale Spannung an dem Vorhang als ein Ergebnis der Schwenkbewegung zu der Endposition verursacht.

2. Spanneinrichtung (10) nach Anspruch 1, wobei das Armelement (12) eine Kurbel (13) an dem anderen Ende zum Verbinden des Armelements (12) mit einem Betätigungsmittel zum Verursachen der Bewegung aufweist.

3. Spanneinrichtung (10) nach Anspruch 2, wobei das Betätigungsmittel ein pneumatisches, hydraulisches oder elektrisches Betätigungsmittel umfasst.

4. Spanneinrichtung (10) nach Anspruch 3, wobei das Betätigungsmittel einen pneumatischen Zylinder (23) umfasst, der eine Betätigungsstange (18), die mit einem freien Ende der Kurbel (13) verbunden ist, ein erstes Führungsmittel zum Führen eines Schwenkpunkts der Kurbel in einer horizontalen Richtung zu einer Stopp-Position und ein zweites Führungsmittel zum Führen des freien Endes der Kurbel (13) anfangs in einer horizontalen Richtung und, wenn der Schwenkpunkt eine Stopp-Position erreicht, in einem Bogen um den Schwenkpunkt aufweist, wodurch das eine Ende des Arms (12) und folglich der Haken (11) abwärts zu der finalen Position schwenkt.

5. Spanneinrichtung (10) nach Anspruch 4, wobei der pneumatische Zylinder (23) in einer ersten Richtung unter Druck gesetzt ist, um das Armelement (12) in der zurückgezogenen Position zurückzuhalten und bei Ablassen des Drucks die Betätigungsstange (18) durch eine Kompressionsfeder (27) an der Stange (18) zu einer Position bewegt wird, in der das Armelement (12) in der ausgefahren Position ist, und der Zylinder (23) in einer zu der ersten Richtung entgegengesetzten Richtung unter Druck gesetzt ist, um zu verursachen, dass der Arm (12) sich zu seiner Endposition bewegt.

6. Spanneinrichtung (10) nach Anspruch 5, die eine manuell betätigt Verriegelungseinrichtung zum Zurückhalten des Armelements (12) in der finalen Position beinhaltet.

7. Spanneinrichtung (10) nach Anspruch 6, wobei das erste und zweite Führungsmittel ein paar von Schlitzen (15, 19) in jeder der gegenüberliegenden Seitenplatten (17) der Einrichtung (10) umfassen, wobei die Schlitze (15, 19) durch Schwenkstifte (16, 26) eingegriffen sind, die sich durch den Schwenkpunkt der Kurbel (13) und dem freien Ende der Kurbel (13) jeweils erstrecken, wobei der Schwenkstift (26), der sich durch das freie Ende der Kurbel (13) erstreckt, auch die Betätigungsstange (18) an der Kurbel (13) anbringt.

8. Spanneinrichtung (10) nach Anspruch 7, wobei die Kompressionsfeder (27) über der Betätigungsstange (18) angeordnet ist und die Betätigungsstange aus dem Zylinder (23) zwingt, bis die Feder (27) ein Stopp-Element (22) an der Einrichtung (10) erreicht, wobei zu diesem Zeitpunkt das Armelement (12) in der ausgefahren Position ist.

9. Spanneinrichtung (10) nach Anspruch 8, wobei eine manuelle Verriegelungsklinke (29) an der Einrichtung (10) zum Eingreifen des Hakens (11) in der Endposition bereitgestellt ist, um ein Zurückbewegen zu der ausgefahrenen oder zurückgezogenen Position in dem Fall zu verhindern, in dem der pneumatische Druck in dem Zylinder (23) ausfällt.

10. Spanneinrichtung (10) nach Anspruch 9, wobei der Haken (11) einen Finger (14), der sich davon erstreckt, aufweist, wobei der Finger (42) verhindert, dass ein Seil oder Kabel (37) des Vorhangs unter dem Armelement (12) oder hinter dem Haken (11), wenn der Arm (12) zu der ausgefahren Position bewegt wird, eingreift, wobei der Finger (14) Mittel zum Eingreifen der Verriegelungsklinke (29) bereitstellt.

## Revendications

1. Dispositif de mise sous tension (10) pour mettre sous tension un rideau latéral de camion ou de remorque dans un sens vertical, ledit dispositif (10) comprenant un élément formant bras (12) qui présente un crochet (11) à une extrémité et est monté dans un cadre pour se déplacer initialement depuis une position rétractée sous un plancher du corps de camion ou de remorque, dans un sens horizontal, vers une position sortie, dans laquelle il forme saillie au-delà d'un bord périmétrique dudit plancher, **caractérisé en ce que** ledit élément formant bras (12) est en outre adapté à effectuer un mouvement de pivotement vers le bas, depuis ladite position sortie vers une position finale sous ledit plancher, la mise en prise dudit crochet (11) avec un rideau latéral dans ladite position sortie ayant pour effet d'engendrer la mise sous tension verticale dudit rideau du fait du mouvement pivotant vers ladite position finale.

2. Dispositif de mise sous tension (10) suivant la revendication 1, dans lequel ledit élément formant bras (12) possède une manivelle (13) à l'autre extrémité pour relier ledit élément formant bras (12) à un moyen d'actionnement pour engendrer ledit mouvement.

3. Dispositif de mise sous tension (10) suivant la revendication 2, dans lequel ledit moyen d'actionnement comprend un moyen d'actionnement pneumatique, hydraulique ou électrique.

4. Dispositif de mise sous tension (10) suivant la revendication 3, dans lequel ledit moyen d'actionnement comprend un cylindre pneumatique (23) ayant une tige d'actionnement (18) reliée à une extrémité libre de ladite manivelle (13), un premier moyen de guidage pour guider un point pivot de ladite manivelle (13) dans un sens horizontal vers une position d'arrêt et un second moyen de guidage pour guider ladite extrémité libre de ladite manivelle (13) initialement dans un sens horizontal et lorsque le point pivot atteint ladite position d'arrêt, de façon à décrire un arc autour dudit point pivot, ce qui a pour effet d'engendrer le pivotement vers le bas, vers la position finale de ladite extrémité dudit bras (12) et, par conséquent, dudit crochet.

5. Dispositif de mise sous tension (10) suivant la revendication 4, dans lequel ledit cylindre pneumatique (23) est pressurisé dans une première direction pour retenir ledit élément formant bras (12) dans ladite position rétractée et, après détente, ladite tige d'actionnement (18) est déplacée par un ressort de compression (27) sur ladite tige (18) vers une position, dans laquelle ledit élément formant bras (12) est dans ladite position sortie, et ledit cylindre (23) est pressurisé dans une direction opposée à la première direction pour engendrer le déplacement dudit bras (12) vers ladite position finale.

6. Dispositif de mise sous tension (10) suivant la revendication 5, le dispositif comprenant un système de verrouillage actionné manuellement pour retenir ledit élément formant bras (12) dans ladite position finale.

7. Dispositif de mise sous tension (10) suivant la revendication 6, dans lequel ledit premier et ledit second moyen de guidage comprend une paire de fentes (15, 19) dans chacune des plaques latérales (17) opposées dudit dispositif (10), fentes (15, 19), dans lesquelles prennent des pivots (16, 26) qui s'étendent respectivement à travers ledit point pivot de ladite manivelle (13) et ladite extrémité libre de celle-ci, ledit pivot (26) s'étendant à travers l'extrémité libre de ladite manivelle (13) tout en fixant ladite tige d'actionnement (18) à ladite manivelle (13).

8. Dispositif de mise sous tension (10) suivant la revendication 7, dans lequel ledit ressort de compression (27) est agencé au-dessus de ladite tige d'actionnement (18) et force celle-ci hors dudit cylindre (23) jusqu'à ce que ledit ressort (27) ait atteint un élément d'arrêt (22) sur ledit dispositif (10), moment, auquel ledit élément formant bras (12) est dans ladite position étendue.

9. Dispositif de mise sous tension (10) suivant la revendication 9, dans lequel un cliquet de verrouillage (29) est prévu sur ledit dispositif (10) pour mettre en prise ledit crochet (11) dans ladite position finale, afin d'empêcher un mouvement en retour vers lesdites positions sortie ou rétractée en cas de défaillance de la pression pneumatique dans ledit cylindre (23).

10. Dispositif de mise sous tension (10) suivant la revendication 9, dans lequel ledit crochet possède un doigt (14) formant saillie, ledit doigt (14) empêchant une corde ou un câble (37) dudit rideau de s'accrocher sous ledit élément formant bras (12) ou derrière ledit crochet (11), lorsque ledit bras (12) est déplacé vers ladite position sortie, ledit doigt (14) fournissant un moyen destiné à entrer en prise avec ledit cliquet de verrouillage (29).
